# EUROPEAN PATENT APPLICATION

(11) **EP 4 036 547 A1**
(43) Date of publication of application: **03.08.2022**
(21) Application number: 21154214.7
(22) Date of filing: 29.01.2021
(51) Int. Cl.: G01M 5/00

(54) **METHOD FOR DETERMINING A PHYSICAL PARAMETER OF A PIPE-FLUID SYSTEM**

(71) Applicant: ABB Schweiz AG, 5400 Baden (CH)
(72) Inventor: SZASZ, Paul, 68723 Plankstadt (DE); SOSALE, Guruprasad, 80997 München (DE); BERNING, Matthias, 67549 Worms (DE); MIGUNOV, Vadim, 68526 Ladenburg (DE)
(74) Representative: Maiwald Patent- und Rechtsanwaltsgesellschaft mbH

(57) **Abstract**

A method for determining a physical parameter of a pipe-fluid system, including: providing a mechanical vibration spectrum of the pipe-fluid system, which is generated by a mechanical excitation impacting an outer surface of the pipe-fluid system;
providing characteristic data of a pipe of the pipe-fluid system;
providing process-fluid data of the pipe-fluid system;
determining a mechanical model vibration spectrum based on a provided theoretical model for the pipe-fluid system and the provided characteristic data of the pipe and the provided process-fluid data;
comparing the mechanical vibration spectrum and the model vibration spectrum for determining the physical parameter of the pipe-fluid system for determining the physical parameter of the pipe-fluid system.

## Description

### Background

Density sensing is a valuable measurement in industrial processes, delivering relevant information on product and process quality. Most available density sensing systems are invasive, requiring the insertion of a device with fluid contact into the process, partly even intrusive, needing a member protruding into the flow. This leads to long installation times and need for process interruption at installation, causing high cost in case of retrofit additionally to the already high cost of the devices, e.g. Coriolis or vibrating fork sensors. The openings in the process piping created by insertion of an additional device also involve safety hazards of potential leakage, which are met with additional effort in sealing and safety measures.

For non-invasive measurements mostly nuclear radiation-based densitometers are used, in which the amount of radiation absorbed by a fluid is correlated to the density, using calibration and theoretical models. While this technology provides robust and accurate measurements even under harsh conditions, the radioactive hazards and high cost of using this equipment make it rather unpopular, limiting its use.

### Description

Non-invasive state of the art density-sensing systems rely on devices mounted at the industrial piping and additional calibration processes to correlate a vibration frequency to actual density change. In many cases, it can be still rather costly to produce a clamp-on device adapted to the pipe dimensions and taking probes for calibration is also tedious and time consuming. It would be valuable for process owners if in some cases a service device, which is mobile and can operate independently of pipe size, i.e. without mounting specific devices on the piping, could be used to deliver at least with an acceptable approximation density related information with respect to e.g. the media type currently filling the pipe and/or an empty or filled fluid status and/or a medium type, as e.g. oil or water or slurry or clean water, and/or to monitor a physical parameter of the pipe-fluid system over defined time spans, as e.g. density changes due to chemical reaction progress, and/or solution composition changes, etc.

Aspects of the present invention are related to a method for determining a physical parameter of a pipe-fluid system, a determination system for determining a physical parameter of a pipe-fluid system, a use of a determination system, a computer program and a machine-readable storage medium with subject matter as described in the independent claims.
Advantageous modifications of the invention are stated in the dependent claims. All combinations of at least two of the features disclosed in the description, the claims, and the figures fall within the scope of the invention. In order to avoid repetition, features disclosed in accordance with the method shall also apply and be claimable in accordance with mentioned systems.

In this entire description of the invention, the sequence of procedural steps is presented in such a way that the process is easily comprehensible. However, the skilled person will recognize that many of the process steps can also be executed in a different order and lead to the same or a corresponding result. In this sense, the sequence of the process steps can be changed accordingly. Some features are provided with counting words to improve readability or to make the assignment more clear, but this does not imply the presence of certain features.

To achieve these and other advantages and in accordance with the purpose of the invention, as embodied and broadly described herein, there is provided a method for determining a physical parameter of a pipe-fluid system, including the following steps. In one step a mechanical vibration spectrum of the pipe-fluid system is provided, which is generated by a mechanical excitation impacting an outer surface of the pipe-fluid system. In a further step, characteristic data of a pipe of the pipe-fluid system are provided. In a further step, process-fluid data of the pipe-fluid system are provided. In a further step, a mechanical model vibration spectrum is determined, which is based on a provided theoretical model for the pipe-fluid system and the provided characteristic data of the pipe and the provided process-fluid data. In a further step, the vibration spectrum and the model vibration spectrum for determining the physical parameter of the pipe-fluid system are compared for determining the physical parameter of the pipe-fluid system.

A mechanical model vibration spectrum includes a part or several parts of a complete mechanical vibration spectrum resulting from a single mechanical vibration mode of the pipe-fluid system and/or a plurality of different mechanical vibration modes of the pipe-fluid system, including a pipe, wherein the pipe can be filled partially or complete by a fluid, like a gas and/or a liquid and/or a mixture and/or a slurry. Particularly the mechanical model vibration spectrum includes at least a single frequency and/or a plurality of frequencies characterising the mechanical vibration mode of the pipe-fluid system.
Characteristics of individual vibration modes can correspond to geometry data of the pipe and/or material properties of the pipe, temperature of the pipe and inside pressure of the pipe and the process-fluid data of the pipe-fluid system.

Alternatively or additionally, the mechanical vibration spectrum can include a plurality of different vibration modes suited for determining the physical parameter, e.g. a density, of the fluid within the pipe.
The accuracy and reliability of the determination of the physical parameter can be improved, if data for at least two different modes of the mechanical vibration spectrum are used, i.e. density dependent frequency values of the mechanical model vibration spectrum in lookup tables are determined and measurements for at least two different vibration modes are performed. In this case, an "acceptance criterion" for estimating the density or other physical parameters of the fluid have to be fulfilled by both vibration modes, thereby increasing the reliability of the determination.

The mechanical excitation includes any mechanical excitation including a pulse impacting the outer surface of the pipe of the pipe-fluid system. A device for generating the mechanical excitation pulse to create the mechanical vibration spectrum within the pipe-fluid system can be any hard, possibly metallic or ceramic object with high hardness and stiffness, i.e. high Young's modulus E greater than 200 GPa, and low weight, e.g. smaller than 50 g, as for instance preferably an impact hammer.

Alternatively or additionally, the mechanical excitation pulse can be generated using a normal wrench or screwdriver impacting the outer surface of the pipe-fluid system manually by an operator.

In a further step of the method, the determined physical parameter can be output, for instance using an interface and/or a screen. This output of the determined physical parameter can include a most likely fluid density and/or an estimated fluid from preselected classes.
Alternatively or additionally, the method includes the step of continuously evaluating a frequency peak shift of the mechanical vibration spectrum and determines the corresponding physical parameter, as e.g. a density of the fluid.

Alternatively or additionally the method includes a provision of a further mechanical vibration spectrum at a later time, wherein the provided mechanical vibration spectrum at a prior time can be used as a reference measurement, which is calibrated with a one-time probe extraction and an off-line density measurement to increase the accuracy of the determination of the physical parameter, e.g. the density of the fluid of the pipe-fluid system.

The pipe-fluid system can be any pipe, which is configured to include a fluid. Preferably, the pipe-fluid system can be a pipe, which is configured to include a fluid, and can comprise vibration mode confining elements, which help to define a vibration mode of the pipe of the pipe-fluid system within a defined section of the pipe. Such a section of the pipe can be described by characteristic data of the pipe, characterizing geometry and material properties of the pipe. Preferably, the pipe section is straight, without junctions or additions.
Each individual confining element can be any flange connected to the pipe like a welded flange and/or a butt-welded flanges and/or threaded connections. Alternatively or additionally at least one of the confining elements can be a confining element configured to be mechanically coupled to the pipe to delimit a segment of the pipe of the pipe-fluid system in respect to vibration modes, for modification of the pipe-fluid system such that a specific mechanical vibration spectrum including a specific mechanical vibration mode can be generated.
A distance between the confining elements can define a length of the pipe-fluid system.

The characteristic data of a pipe of a pipe-fluid system can include geometry data of the pipe and/or the pipe-fluid system, which can be generated by local measurements, which can be provided by a mobile device, and/or provided by technical data, and/or data on the material of the pipe and/or an expected frequency range and/or an expected vibration frequency spectrum and/or a pipe surface temperature.

The process-fluid data can include an expected fluid type, like gas and/or liquid and/or and expected density of the fluid and/or a fluid pressure value and/or a fluid temperature and/or an expected fluid.

The comparing of the vibration spectrum and the model vibration spectrum for determining the physical parameter can be done using a mobile device, e.g. mobile phone, which is equipped with sensors. These sensors can include a sensor for acoustic signal acquisition, e.g. a microphone and/or and an accelerometer, including a functionality for analyzing the acoustic signal, that means e.g. a frequency spectrum analysis. The mobile device can include a distance measurement device and/or a dimension measurement device. Such devices can include an ultrasonic sound based sensor and/or a laser system and/or a camera, to determine a pipe section length and/or a pipe diameter and/or a pipe wall thickness.
Alternatively or additionally, the mobile device can include a system for surface temperature measurement, e.g. an infrared sensor or a contact temperature sensor.

A mechanical vibration spectrum on a surface of the pipe-fluid system is changed by changes of a fluid inside of the pipe, thereby changing the physical parameter of the pipe-fluid system, enabling to determine parameters and/or conditions of the fluid of the pipe-fluid system using model calculations on vibrations and vibration modes of the pipe based on parameters of the pipe, like material and/or wall thickness and/or diameter of the pipe and/or temperature of the pipe etc. as further discussed below.

The mechanical model vibration spectrum can be provided by a theoretical model for the pipe-fluid system, preferably using finite element calculations or alternatively analytic calculations. The results typically enable determination accuracies of physical parameters within 5 % tolerance or better. Changes in fluid composition leading to density changes typically result in much larger frequency changes. As a result, the frequency for different process fluid fillings can be predicted and the measured frequencies correlated to the predicted values with good confidence.

The results of the above described calculations can be compiled in lookup-tables for various characteristic pipe configurations. The lookup-tables offer easy storage in a mobile device and can be configured to be interpolated for spectrum values not provided by the lookup-table. Such a lookup table can provide vibration frequency values of density-sensitive mechanical vibration modes for a range of industrial pipe dimension combinations and fluid types, including pipe diameter and/or pipe wall thickness and/or pipe-fluid system length and/or fluid classes, as gas and/or liquid and/or temperatures of the pipe.
Additionally or alternatively, the lookup-table can include sensitivity values for density change as function of frequency of the mechanical vibration spectrum and/or fluid and/or pipe temperature and/or fluid pressure.
That means the provided mechanical vibration spectrum is compared with a provided mechanical model vibration spectrum based on expected frequencies.

Using other words, a method for determining of a density and/or a change of the density of a process fluid within a pipe using a hand-held mobile device is described. The mechanical vibration spectrum of the pipe-fluid system can be generated by exciting the pipe-fluid system to vibrate and an excitation response is measured to derive an estimation of physical properties and changes of the physical properties, e.g. a density of the fluid, using the measured vibration characteristics, e.g. a vibration frequency. The determination of the physical parameter based on the measured vibration characteristics can be done using an algorithm, based on the vibration characteristics and/or on measurements of pipe geometries and/or with knowledge or estimation of pipe material properties and/or a measured pipe surface temperature using pre-established look-up tables or modeling means for provision of a interdependence of a vibration characteristics and physical properties, as a function of the above parameters. The estimation enables e.g. to distinguish between filled and empty pipes, between two possible, significantly different fluids within the same pipe, e.g. water or oil, as well as to quantify density changes with time relative to an initial state.
Based on a frequency measurement process for providing the mechanical vibration spectrum the fluid type within a pipe can be determined non-invasively, by comparing the mechanical vibration frequency of the pipe with a mechanical model vibration spectrum including calculated frequency values for various preselected fluids.

Advantageously the method provides a non-invasive estimation and/or determination on a physical parameter of the process fluid within a pipe of the pipe-fluid system. The estimation can be a statement on the physical state of the fluid, as e.g. liquid or gas and/or a composition, as e.g. water, water-oil or water-sand mixture and/or quantitative values on the change of density over time, derived from a density and/or a change of the density and/or a flow determination using a preselection list of fluids, which can be expected within the pipe.

According to an aspect, a length of the pipe-fluid system is delimited by vibration mode confining elements at both ends of the pipe-fluid system.
Using such confining elements mechanically coupled to the pipe of the pipe-fluid system can increase the accuracy and provide a pipe-fluid system with a specific dimension for generation of a desired mechanical vibration spectrum.

According to an aspect, the mechanical vibration spectrum of the pipe-fluid system is provided by an acoustic signal acquisition system acoustically coupled to the pipe-fluid system and/or an acceleration acquisition system mechanically coupled to the outer surface of the pipe-fluid system.
Advantageously the acoustic signal acquisition system and/or the acceleration acquisition system is provided by a mobile device for local and easy and fast determining the physical parameter of the pipe-fluid system.

According to an aspect, the method includes filtering of the provided vibration spectrum, using the process-fluid data and the model vibration spectrum corresponding to the process-fluid data, for comparing the vibration spectrum and the model vibration spectrum.
This filtering of the provided vibration spectrum can limit the frequency range of the vibration spectrum in respect to an upper and a lower frequency value depending on the process-fluid data and the model vibration spectrum corresponding to the process-fluid data, to increase accuracy and reliability of the method.

According to an aspect, the method includes providing a temperature of the outer surface of the pipe-fluid system and determining the mechanical model vibration spectrum additionally based on the temperature of the outer surface of the pipe-fluid system.
Advantageously the determined temperature of the outer surface of the pipe-fluid system increases the accuracy in comparison to an estimated temperature of the fluid and/or the temperature of the pipe material of the pipe-fluid system.

According to an aspect, the physical parameter includes a density of the process-fluid of the pipe-fluid system and/or a viscosity of the process-fluid of the pipe-fluid system and/or a flow of the process-fluid of the pipe-fluid system.
For determining of the viscosity of the process fluid at least, parts of the mechanical vibration spectrum are compared in respect to a form of the spectrum, e.g. the width of a peak, to a mechanical model vibration spectrum.

According to an aspect, the characteristic data of the pipe of the pipe-fluid system includes a diameter of the pipe and/or a thickness of the pipe and/or a material of the pipe of the pipe-fluid system and/or a length of the pipe-fluid system.

According to an aspect, the theoretical model for the vibration spectrum of the pipe-fluid system is based on a finite-element calculation of a plurality of pipe-fluid systems comprising different characteristic data of the respective pipes and/or comprising of a plurality of process-fluids, wherein each process-fluid comprises different process-fluid data.
Advantageously the determining of the theoretical model for the vibration spectrum based on a finite-element calculation can improve the accuracy.

According to an aspect, the theoretical model for the model vibration spectrum is calculated using a computer system and/or the model for the vibration spectrum is provided by a list for a plurality of pipe-fluid systems including different process-fluid data.
Providing the theoretical model in form of lookup tables, e.g. in form of a tabular list, to a mobile device can enable the method to be performed by a mobile device with high accuracy, because the calculation performance of a mobile device can be limited.

According to another aspect a determination system for determining a physical parameter of a pipe-fluid system is disclosed, which is configured to perform the method according to the preceding claims.
Such a determination system enables a user to perform the method in an easy way at different locations.

According to an aspect, the determination device comprises an acoustic signal acquisition system to provide a mechanical vibration spectrum of the pipe-fluid system and/or a temperature acquisition system to provide a temperature of the pipe-fluid system and/or an acceleration acquisition system to provide a mechanical vibration spectrum of the pipe-fluid system and/or the determination device is configured to be electrically coupled to an acceleration acquisition system and/or the determination device comprises a first interface for providing a mechanical vibration spectrum of the pipe-fluid system and/or the determination device comprises a second interface for providing characteristic data of a pipe of the pipe-fluid system and/or the determination device comprises a third interface for providing process-fluid data of the pipe-fluid system and/or the determination device comprises a screen to output the determined physical parameter.
According to an aspect, the first interface and/or the second interface and/or the third interface includes a screen and/or a touchscreen.
Advantageously using the determination device enables an operator to determine the physical parameter using the method for determining a physical parameter by just generating a mechanical excitation, as e.g. an excitation pulse, for instance by using a hammer and/or a high stiffness impact device.

According to an aspect, the determination system is configured to be coupled to an external system and/or to a multitude of different external systems in respect to exchange of signals, wherein at least one external system is configured to perform at least one of the methods and/or at least one step of the methods as described above.
Advantageously, the determination system configured to be coupled to an external system can be configured to externalize its functionality and/or at least parts of its functionality, preferably if the determination system is limited in its operation ability more complex operations of the method as described above can be externalized and results of the externalized operations can be received by the determination system to be output to an operator.

According to an aspect, the determination system is implemented using a mobile device.
Advantageously using such a mobile device including the functionality of the determination system enables an operator to determine the physical parameter non-invasively by just generating a mechanical excitation pulse, for instance by using a hammer and/or a high stiffness impact device at a local site without extensive preparation of a measurement setup. Such a mobile device can be implemented as a handheld device, as for instance a modified mobile phone.
Such a mobile device can include an acoustic vibration sensor and software for vibration analysis, an input interface to provide pipe material and an interface to provide pipe material and geometry data of the pipe-fluid system. The mobile device can further include look-up tables or means for modeling the mechanical model vibration spectrum as a function of the characteristic data of the pipe and the process-fluid data of the pipe-fluid system and include calculation software for the determination of the physical parameter and an output interface, as for instance a display, to output the physical parameter.

According to a further aspect, a use of a determination system for determining a density of a process-fluid of a pipe-fluid system and/or for determining a viscosity of the process-fluid of the pipe-fluid system and/or for determining a flow of the process-fluid of the pipe-fluid system and/or determining a pressure of the process-fluid of the pipe-fluid system is disclosed.

According to another aspect a computer program, particularly an app, comprising instructions is disclosed, which, when the program is executed by a computer, cause the computer to carry out one of the described methods.
Such a computer program enables the use of the described method in different systems.

According to another aspect of the present invention, a computer-readable storage medium is disclosed on which the computer program is stored.

### Brief description of the drawings

The accompanying drawings, which are included to provide a further understanding of the invention and are incorporated in and constitute a part of this application, illustrate embodiments of the invention and together with the description serve to explain the principle of the invention. The drawings display:
- Figure 1: a schematic drawing of a pipe-fluid system with exemplary vibration modes;
- Figure 2: a diagram characterizing a mechanical vibration spectrum;
- Figure 3: a mobile non-invasive determination system;
- Figure 4: a sequence of steps of a method for measuring a mechanical vibration spectrum of the pipe-fluid system;
- Figure 5: a sequence of steps of a method for determining the physical parameter of the pipe-fluid system; and
- Figure 6: a sequence of steps of a method for determining a density change.

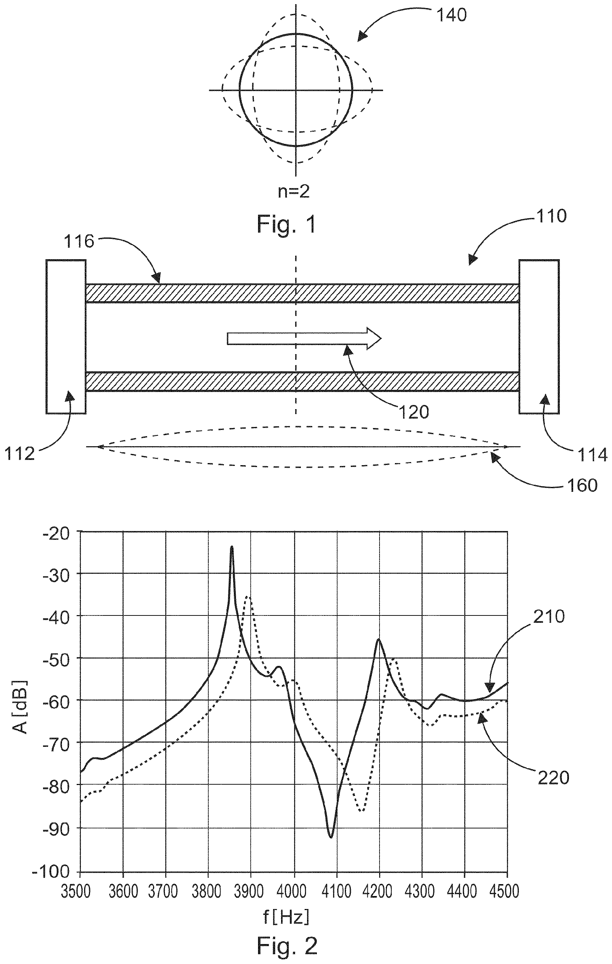

Figure 1 sketches schematically a section of a pipe 116, which is set up as a pipe-fluid system 110 comprising a vibration mode-confining element 112, 114 at both ends of the section of the pipe 116, wherein a fluid 120 is flowing inside of the pipe 116. Respective vibration modes 140, 160 are indicated as an example. The modes are each characterized by the deformation in two planes. The circumferential deformations 140 and the longitudinal deformation 160. Any combination of these two deformation types is possible, being characterized by a combination of the characteristic numbers n and m, which are related to the number of vibrational nodes in the given plane. The examples refer to the combination n2m1, but other vibrational modes can be used to perform the determination.

Figure 2 sketches schematically an example of a vibration frequency spectrum 210 where an amplitude of the vibration of a vibration mode is shown depending on a frequency of the mechanical vibration and a shifted vibration frequency spectrum 220 due to the change of a physical parameter of the fluid 120 within the pipe 116.

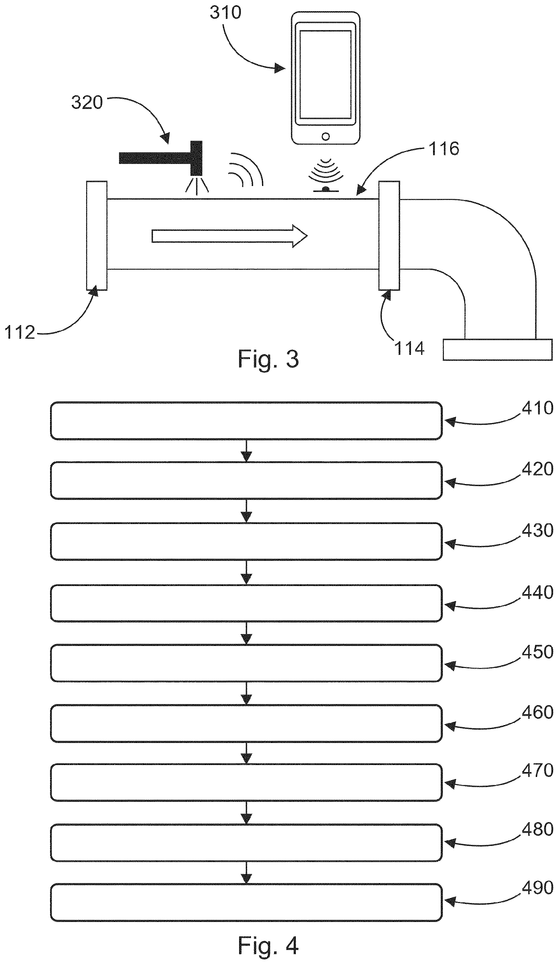

Figure 3 sketches schematically a determination system 310, which is configured to measure a vibration spectrum 210, 220 of the segment of the pipe 116, mechanically coupled to vibration mode confining elements 112, 114 and a device 320, like e.g. a hammer, to generate a mechanical vibration spectrum by a mechanical excitation pulse.

Figure 4 sketches schematically a sequence of steps of a method for measuring a mechanical vibration spectrum 210, 220 of the pipe-fluid system 110. In step 410 a pipe section is selected as a pipe-fluid system 110. In a next step 420 the geometry of the pipe 116, like the length of the pipe-fluid system 110, the diameter of the pipe and the wall thickness of the pipe of the pipe-fluid system 110 are measured. In step 430 the characteristic data of the pipe, as e.g. the geometry of the pipe and material data of the pipe and the pressure within the pipe of the pipe-fluid system 110 are input into the mobile device. At step 440 assumed process-fluid information, as estimations for possible scenarios, e.g. liquid or gas, pipe fill status, as full or empty, pure water, water-oil or water-sand mixture, etc., is input to the mobile device. At step 450 a mechanical model vibration spectrum 210, 220 is determined based on a provided theoretical model for the pipe-fluid system 110 and the provided characteristic data of the pipe and the provided process-fluid data and/or sensitivity prediction calculations for potential scenarios are performed, based on look up tables, preferably using interpolation calculations. At step 460 an expected frequency range for filtering the mechanical vibration spectrum 210, 220 is defined. At step 470 a mechanical vibration spectrum 210, 220 is generated using a mechanical excitation pulse, like an impact of a small hard object 320, and/or by inherent vibrations of the pipe-fluid system 110. At step 480 an outer surface temperature of the pipe-fluid system 110 is measured using the mobile device 310, e.g. by using an infrared sensing system. At step 490 the mechanical vibration spectrum 210, 220 is measured, e.g. by an acoustic signal acquisition system and at least a relevant frequency within the expected range of the mechanical vibration spectrum 210, 220 is determined.
Additionally or alternatively the mechanical model vibration spectrum 210, 220 can be adapted to the surface temperature of the pipe-fluid system 110 measured at step 480.

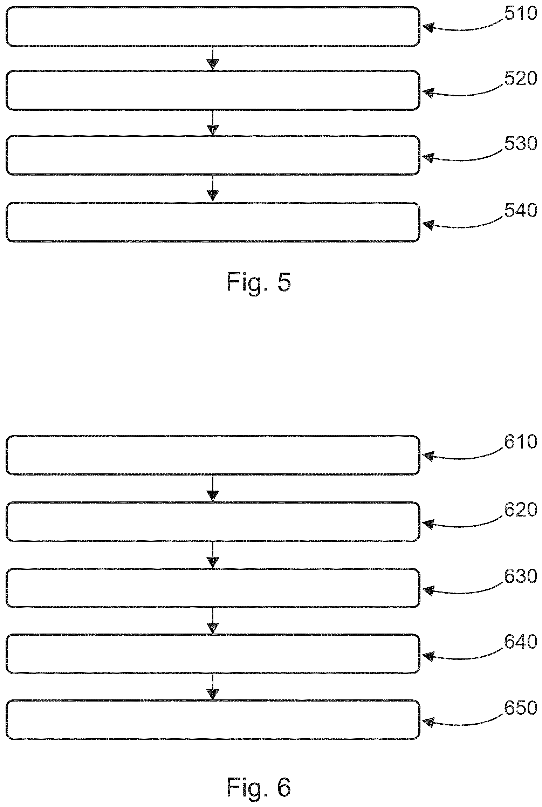

Figure 5 sketches schematically a sequence of steps of a method for determining the physical parameter of the pipe-fluid system 110 with a first step 510 where at least a measured frequency of the mechanical vibration spectrum 210, 220 is compared with at least a frequency value of the mechanical model vibration spectrum determined at step 450 of the method for measuring a mechanical vibration spectrum 210, 220. At step 520 a most likely fluid state is determined based on the smallest deviation between the at least one frequency value of the mechanical vibration spectrum 210, 220 and the at least one frequency of the mechanical model vibration spectrum. At step 530 steps 450 and 460 of the method for measuring a mechanical vibration spectrum 210, 220 as well as steps 510 and 520 can be repeated if necessary, i.e. if the deviation is too large, so that another reference fluid needs to be chosen. At step 540 a most likely fluid state, e.g. a liquid or gas status of the fluid and/or an empty or a full pipe and/or a fluid comprising pure water or a water-oil mixture or the water-sand mixture, etc., is output by the mobile device 310.

Figure 6 sketches schematically a sequence of steps of a method for determining a density change. At step 610 the at least one frequency value determined in step 490 of the method for measuring a mechanical vibration spectrum 210, 220 of the pipe-fluid system 110 is stored in a first memory location. At step 620 an initial value for the physical parameter, as for instance a density of the process-fluid, is stored in a second memory location, wherein the initial value is based on calibration and/or from the output value of step 540 of the method for determining the physical parameter. At step 630 the steps 470, 480 and 490 of the method for measuring a mechanical vibration spectrum are continuously or intermittently repeated to generate a plurality of mechanical vibration spectra. At step 640 for each measurement of the mechanical vibration spectrum 210, 220 the physical parameter of the pipe-fluid system 110, as e.g. the density of the fluid, is determined based on the sensitivity estimation of step 450 of the method for measuring a mechanical vibration spectrum. At step 650, an optional alarm is set, if for instance a change of the density exceeds a defined threshold.

## Claims

1. A method for determining a physical parameter of a pipe-fluid system (110), comprising:
providing a mechanical vibration spectrum (210, 220) of the pipe-fluid system (110), which is generated by a mechanical excitation impacting an outer surface of the pipe-fluid system (110);
providing characteristic data of a pipe of the pipe-fluid system (110);
providing process-fluid data of the pipe-fluid system (110);
determining a mechanical model vibration spectrum (210, 220) based on a provided theoretical model for the pipe-fluid system (110) and the provided characteristic data of the pipe and the provided process-fluid data;
comparing the mechanical vibration spectrum (210, 220) and the model vibration spectrum for determining the physical parameter of the pipe-fluid system (110) for determining the physical parameter of the pipe-fluid system (110).

2. The method according to the preceding claim, wherein a length of the pipe-fluid system (110) is delimited by vibration mode confining elements (112, 114) at both ends of the pipe-fluid system (110).

3. The method according to any of the preceding claims, wherein the mechanical vibration spectrum (210, 220) of the pipe-fluid system (110) is provided by an acoustic signal acquisition system acoustically coupled to the pipe-fluid system (110) and/or an acceleration acquisition system mechanically coupled to the outer surface of the pipe-fluid system (110).

4. The method according to any of the preceding claims, comprising:
filtering of the provided vibration spectrum (210, 220), using the process-fluid data and the model vibration spectrum corresponding to the process-fluid data, for comparing the vibration spectrum (210, 220) and the model vibration spectrum.

5. The method according to any of the preceding claims, comprising:
providing a temperature of the outer surface of the pipe-fluid system (110); and determining the mechanical model vibration spectrum (210, 220) additionally based on the temperature of the outer surface of the pipe-fluid system (110).

6. The method according to any of the preceding claims, wherein the physical parameter includes a density of the process-fluid of the pipe-fluid system (110) and/or a viscosity of the process-fluid of the pipe-fluid system (110) and/or a flow of the process-fluid of the pipe-fluid system (110) and/or a pressure of the process-fluid of the pipe-fluid system (110).

7. The method according to any of the preceding claims, wherein the characteristic data of the pipe of the pipe-fluid system (110) includes a diameter of the pipe and/or a thickness of the pipe and/or a material of the pipe of the pipe-fluid system and/or a length of the pipe-fluid system (110).

8. The method according to any of the preceding claims, wherein the theoretical model for the vibration spectrum of the pipe-fluid system (110) is based on a finite-element calculation of a plurality of pipe-fluid systems comprising different characteristic data of the respective pipes and/or comprising of a plurality of process-fluids, wherein each process-fluid comprises different process-fluid data.

9. The method according to any of the preceding claims, wherein the theoretical model for the model vibration spectrum is calculated using a computer system and/or the model for the vibration spectrum is provided by a list for a plurality of pipe-fluid systems (110) including different process-fluid data.

10. A determination system for determining a physical parameter of a pipe-fluid system (110), configured to perform the method according to the preceding claims.

11. The determination system according to claim 10, wherein the determination device (310) comprises an acoustic signal acquisition system to provide a mechanical vibration spectrum of the pipe-fluid system (110) and/or a temperature acquisition system to provide a temperature of the pipe-fluid system (110) and/or an acceleration acquisition system to provide a mechanical vibration spectrum (210, 220) of the pipe-fluid system (110) and/or the determination device (310) is configured to be electrically coupled to an acceleration acquisition system and/or the determination device (310) comprises a first interface for providing a mechanical vibration spectrum (210, 220) of the pipe-fluid system (110) and/or the determination device (310) comprises a second interface for providing characteristic data of a pipe of the pipe-fluid system (110) and/or the determination device (310) comprises a third interface for providing process-fluid data of the pipe-fluid system (110) and/or the determination device (310) comprises a screen to output the determined physical parameter.

12. The determination system (310) according to claim 10 or 11, wherein the determination device (310) is implemented by a mobile device.

13. Use of a determination system according to any of the claims 10 to 12, for determining a density of a process-fluid of a pipe-fluid system (110) and/or for determining a viscosity of the process-fluid of the pipe-fluid system (110) and/or for determining a flow of the process-fluid of the pipe-fluid system (110) and/or determining a pressure of the process-fluid of the pipe-fluid system (110).

14. A computer program, particularly an app, comprising instructions, which, when a computer system, particularly a computer system at a local platform, executes the program, cause the computer system to carry out the method according to one of claims 1 to 9.

15. Computer-readable storage medium on which the computer program of claim 14 is stored.
